# EUROPEAN PATENT APPLICATION

(11) **EP 1 455 342 A1**
(43) Date of publication of application: **08.09.2004**
(21) Application number: 04075614.0
(22) Date of filing: 26.02.2004
(51) Int. Cl.: G10L 15/22, B60R 16/02, B60R 11/02

(54) **System and method for voice enabling audio compact disc players via descriptive voice commands**

(30) Priority: 05.03.2003 US 379755
(71) Applicant: Delphi Technologies, Inc., Troy, MI 48007 (US)
(72) Inventor: Wilhelm, Andrew L., Kokomo, Indiana 46902 (US); Coon, Bradley S., Russiaville, Indiana 46979 (US)
(74) Representative: Denton, Michael John

(57) **Abstract**

The present invention is directed to a system (20A, 20B) and method of navigating audio compact discs utilizing voice commands. The system includes both in-vehicle components and off-vehicle components. In the vehicle are the compact disc player (22) and a processor (24) associated with the player and an optional local database (26) of data relating to compact discs, such as the song titles, track numbers, etc. Off the vehicle is at least one remotely located database (38, 42) of compact disc information which is searched by the processor via a link, such as a wireless network (28, 36) or the Internet. The user would insert a compact disc (46) and describe the desired song, with the processor searching the local and remote databases (48, 60, 66) for data relating to the compact disc and a matching description of the song to be played. When a match is found (50, 62, 68), the song is played (56) and if no match is found, then the system defaults to conventional navigation controls (76).

## Description

### TECHNICAL FIELD

This invention relates to systems and methods of navigating audio compact discs in vehicles.

### BACKGROUND OF THE INVENTION

Compact disc players are becoming ever more prevalent in automobiles, with the compact disc player usually being used to play audio compact discs (CDs) for enjoyment of the occupants of the vehicle. Typical CD players usually require hand manipulation of the controls, such as play, stop, and seek, to select a certain track on the CD or to change CDs to select different songs. Also, CD players in automobiles are structured such that only a CD within that CD player or an associated changer, are available for supplying information relative to the CD track to be selected.

Although hand manipulation of the controls is most common, other methods of navigating the CDs have included voice commands. Navigation, as used in this context, includes moving through data stored on CDs to a desired position or selection. Such voice commands, or other audible speech data, usually require the speaker to use certain generic commands such as "next" or "previous" to select the track to which the speaker wishes to listen. As such, a speaker is required to say "next" repeatedly to find the desired CD track. Alternatively, the speaker states a certain disc and a certain track number on that disc for selection of the song. This system requires the user to remember on which CD the selection is located and to remember the track number. However, while hand manipulation is not required, the systems are rather cumbersome and require the user to remember the exact track number and disc in order to find the selected song, or to be extremely patient and vocally search through the tracks.

### SUMMARY OF THE INVENTION

The present invention is directed to a system and method of navigating audio compact discs utilizing descriptive voice commands. The system includes both in-vehicle components and off-vehicle components. In the vehicle is the compact disc player with a processor; as an option, a local database of data relating to compact discs, such as the song titles, track numbers, etc. may be provided. Off the vehicle is at least one remotely located database of compact disc information which is capable of being searched by commands received from the processor via a link, such as a wireless network or the Internet. The user would insert a compact disc and describe the song to be played, with the processor searching the databases for data relating to the compact disc in the player and a matching description of the song to be played. When a match is found, the song is played and if no match is found, then the system defaults to conventional navigation controls.

According to an embodiment of the invention, a method of navigating audio compact discs by descriptive commands is provided. The method includes the steps of inserting a compact disc in an in-vehicle audio player, obtaining descriptive data from a voice instruction within the vehicle relating to a desired selection, matching the descriptive data with a selection from the compact disc, and playing the selection.

A system for navigating compact discs in a vehicle utilizing voice instructions from within the vehicle is also provided with the system including a compact disc player adapted to receive and play a selected compact disc, a processor associated with the player and including software adapted to receive voice instructions and process the instructions, and means for accessing information in a database containing information relating to compact discs. The software includes instructions so that when a compact disc is inserted in the player and voice instructions are provided in the vehicle, the processor sends a request for a selection to the database based upon the voice instructions received.

An embodiment of the invention also provides a method of playing audio compact discs in a vehicle including the steps of providing an in-vehicle compact disc player having a default playing condition, inserting a compact disc into the player, describing via voice instructions a musical selection to be played which is on the compact disc, searching a database of compact disc information for data relating to the compact disc in the player, finding a match of the voice instructions to the selection of the compact disc, and playing the musical selection.

### BRIEF DESCRIPTION OF THE DRAWINGS

The above mentioned and other advantages and objects of this invention, and the manner of attaining them, will become more apparent and the invention itself will be better understood by reference to the following description of an embodiment of the invention taken in conjunction with the accompanying drawings, wherein:
Figure 1 is a flowchart showing the operational steps of a method for voice-enabling compact discs, in accordance with the present invention;
Figure 2 is a schematic diagram of a first embodiment of a system used in accordance with the method of Figure 1; and
Figure 3 is a schematic diagram of a second embodiment of a system used in accordance with the method of Figure 1.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate two embodiments of the invention and such exemplification is not to be construed as limiting the scope of the invention in any manner.

### DESCRIPTION OF THE INVENTION

The embodiments disclosed below are not intended to be exhaustive or limit the invention to the precise forms disclosed in the following detailed description. Rather, the embodiments are chosen and described so that others skilled in the art may utilize their teachings.

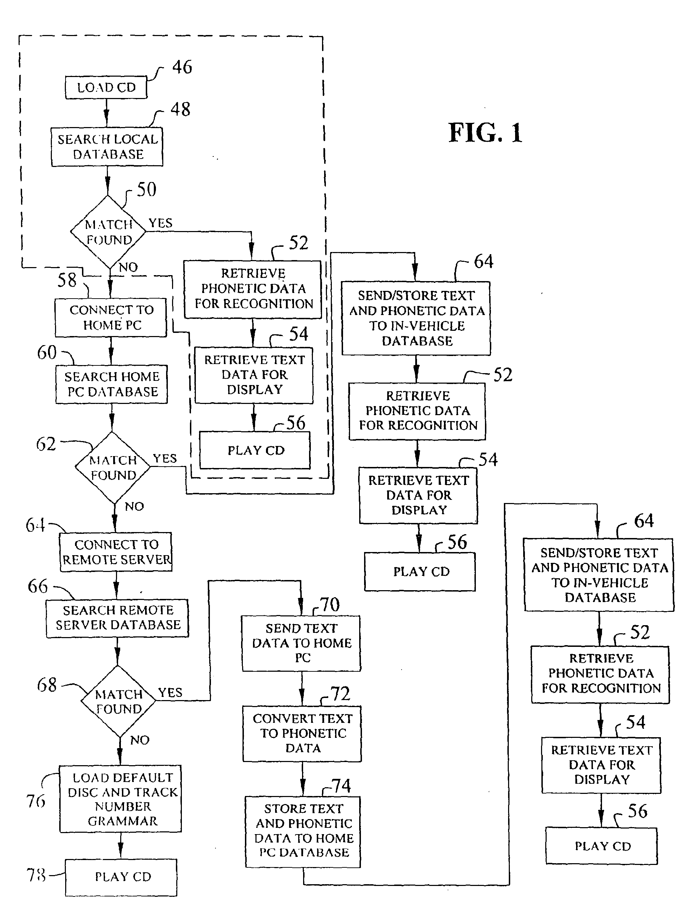

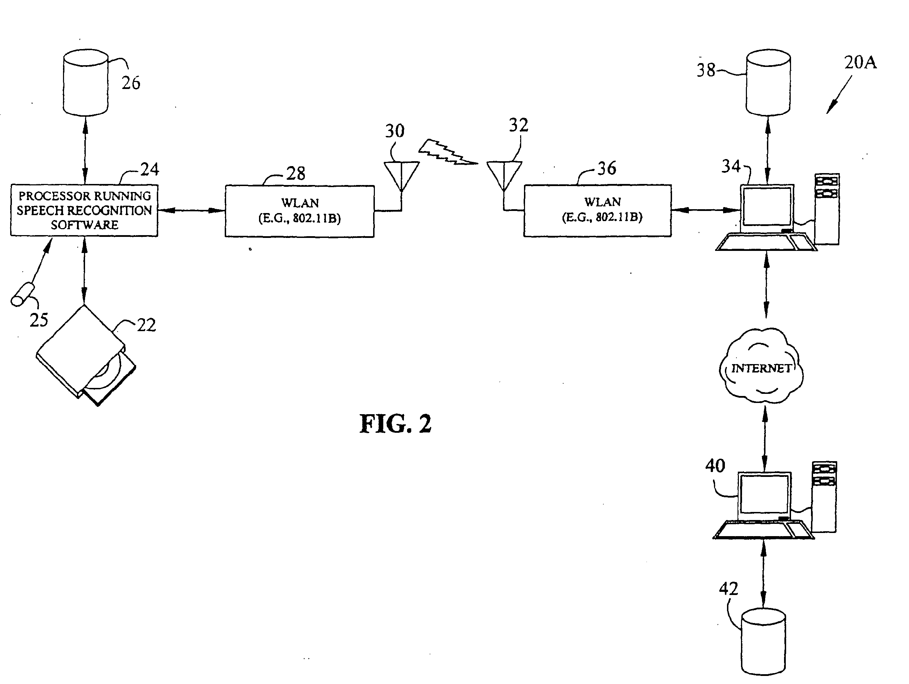

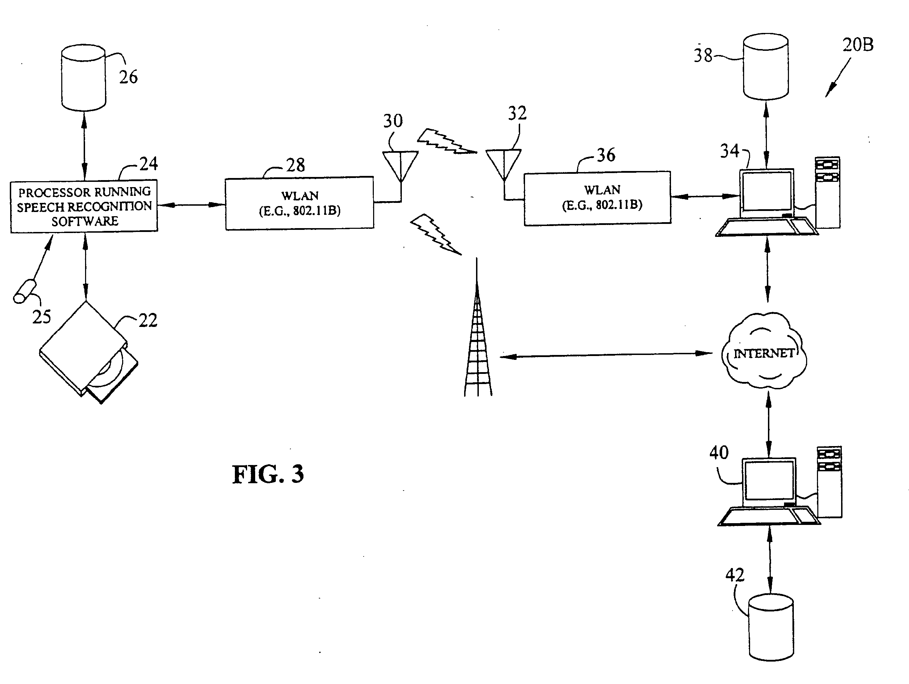

Referring to Figures 1, 2, and 3, a method and systems of navigating compact discs (CDs) by using descriptive voice commands are shown. Specifically referring to Figures 2 and 3, two alternative embodiments of system 20 for navigating audio CDs are shown with system 20A in Figure 2 and system 20B in Figure 3. Both systems 20A and 20B include CD player 22, such as that currently in vehicles, which may either include or be in communication with microprocessor 24.

System 20 also includes microphone 25 to receive voice commands, or speech data, from users within the vehicle. Speech data generally includes the audible voice commands or other audible sounds, which can be measured and/or recorded for transmission and other related uses in the form of the measured sound from microphone 25, for example using digital formats such as DM2, LMP, MPEG, SMIL, or WAV. In addition to the speech data, phonetic data may also be used and interpreted; the phonetic data being a linguistic representation of the speech data and being capable of converted into audible sounds, such as computerized speech in the form of encoded values based on the speech data, such as Uniscribe or GDL (graphite descriptive language).

Microprocessor 24 also includes memory for speech recognition software for interpreting speech data received from the user of system 20 via microphone 25. Optionally included, and also in communication with microprocessor 24, is local CD database 26 which includes information, such as titles, tracks, etc. about CDs. Such CD information may be acquired over a course of usage or programming, such as by receiving information from other databases and storing that information, as described below. In communication with processor 24 is wireless local area network 28 which is connected to transmission device 30 for transmission of a request for information to either a remote database or a home-based database.

Although CDs are the primary focus of systems 20A and 20B, the CDs and CD player 22 may be replaced with other devices and forms of addressable electronic information, such as, for example, digital video discs, memory cards or strips, magnetic devices, optical storage devices, and other related improvements. Alternatively, the CDs and CD player 22 may be replaced with other known devices such as other storage media that includes table of contents type of data referencing addressable electronically stored music. Thus, although the exemplary embodiment is described in relation to CDs, the present invention may be implemented with any of the foregoing or equivalent devices and a suitable audio player 20.

Both systems 20A and 20B further include another transmission device 32 capable of communicating with an off-vehicle database which may be home personal computer (PC) 34 connected via home based wireless local area network 36. Home PC 34 is further in communication with a remote CD information database, which may be considered home PC database 38. After connection to home PC 34, systems 20A and 20B differ.

The terms "network", "local area network", "LAN", "wide area network" or "WAN" mean two or more computers which are connected in such a manner that messages may be transmitted between the computers. The terms "wireless wide area network" or "WWAN" and "wireless local area network" or "WLAN" mean a wireless network that serves as the medium for the transmission of data between a handheld device, or other related device such as CD player 22, and a computer. In wireless wide area networks, communication primarily occurs through the transmission of radio signals over analog, digital cellular, or personal communications service ("PCS") networks. Signals may also be transmitted through microwaves and other electromagnetic waves. Currently, most wireless data communication takes place across cellular systems using second generation technology such as code-division multiple access ("CDMA"), time division multiple access ("TDMA"), the Global System for Mobile Communications ("GSM"), personal digital cellular ("PDC"), or through packet-data technology over analog systems such as cellular digital packet data ("CDPD") used on the Advance Mobile Phone Service ("AMPS"). The present invention may utilize any of these known technologies for wireless transmission, as well as suitable future wireless technologies.

System 20A further includes a connection to computer databases available from remote servers 40, such as through a telecommunications link or over a computer network such as the Internet. Remote servers 40 are connected to remote CD information databases 42. Such a structure then enables the user of system 20A to have additional access to information about CDs which may not be in his or her possession or may not be stored in local database 26 or PC database 38.

As used herein, the "Internet" refers to a world wide network of computers, which is alternatively known as the "World Wide Web" or simply the "Web". As is known, browsers utilizing a communications protocol for transmission of text and graphics over the Internet or the Web are required to provide the necessary interface capabilities between CD player 22 and the various remote databases accessed using the Internet. Examples of Browsers compatible with the present invention include the Navigator program sold by Netscape Corporation and the Internet Explorer sold by Microsoft Corporation (Navigator and Internet Explorer are trademarks of their respective owners). Alternatively, the present invention may be practiced with text based interfaces, or even with voice or visually activated interfaces, that have many of the functions of a graphic based browser.

System 20B, in addition to transmission device 32 and wireless local area network 36 on the off-vehicle portion, includes a transmission device and connection via transmission infrastructure 44. Such transmission infrastructure may utilize cellular technology with appropriate protocols (e.g. time division multiple access [TDMA], code division multiple access [CDMA] or third generation global system for mobile communication [3GSM or 3G], such as described above, or may utilize enhanced data for global evolution [EDGE]) or radio broadcasts with general packet radio service (GPRS). Using such transmission methods, the receiving unit (not shown) of transmission structure 44 is then connected to remote server 40 and remote database 42. As with system 20A, the Internet may be used to provide the connection to remote server 40 and remote CD database 42. However, instead of information from remote CD database 42 being transmitted back to in-vehicle processor 24 via only network and transmission devices 30 and 32, information from remote database 42 is transmitted to the vehicle via telecommunications infrastructure 44.

Figure 1 depicts a flow chart of the actual operative steps. First, the user would load a CD (block 46) after which processor 24 would search local database 26 (block 48) for information relating to the desired music selection in local database 26 (block 50). Since local database 26 is an optional feature, the steps relating to local database 26 are shown enclosed within a dashed box. If a match was found, then the phonetic data relative to the particular music selection in database 26 (block 52) is retrieved, and the textual data associated with the selection is also retrieved (block 54). This data is then used for display of the music selection in the vehicle and lastly the CD is played (block 56) by using the retrieved data.

While the term "match" implies finding a substantially identical copy of information, "match" in this context does not denote such an identical copy but instead denotes a correspondence between the speech data, or the voice commands provided by the user, and information contained within the various databases. The databases contain data relating to a variety of CDs such as song duration, personal titles for songs, arrangement of songs, etc. The CD is inserted and the encoded data on the CD is read and transmitted to the databases. A match is found when the database contains substantially, or sufficiently, similar data to the data associated with a particular track on the CD. The level of sufficiency for obtaining a match may be varied by varying the criteria used by the software which determines the match. The additional data can then be used for playing the selection, i.e., the user may say, "play my song" and using the match and additional data the song is found and played.

However, if there is no local database 26 or if the needed information was not found in local database 26, then processor 24 connects to home PC 34 (block 58) for searching home PC database 38 (block 60). As described with reference to Figures 2 and 3, this is accomplished by networks 28 and/or 36 and/or transmission devices 30 and/or 32. Again, the determinative question is if a match was found for the CD and the particular music selection (block 62) in database 38. If such a match was found, then the information from database 38 is sent and stored by in-vehicle database 26 (block 64), thereby expanding the store of information within in-vehicle database 26. After that, the phonetic data and textual data are retrieved (blocks 52 and 54) and the CD is then played (block 56).

If a match is not found in the home PC database 38, then processor 24 connects to remote server 40 (block 64) for searching remote database 42 (block 66). As described with respect to Figures 2 and 3, the connection to the remote server is accomplished by transmission device 32 and network 36 and home PC 34 in system 20A whereas a direct connection to remote server 40 and database 42 is accomplished in system 20B by using cellular communications and the cellular infrastructure 44. However, both systems 20A and 20B may utilize the Internet for accessing remote database 40 and remote server 42.

Once a connection to remote server database 42 has been established, again the question is whether a match for the CD and the information relative to the desired music selection has been found in the remote database (block 68). If such a match is found, then the textual data is sent to home PC 34 (block 70) where the textual data is converted to phonetic data (block 72). Alternatively, the conversion to phonetic data may occur at processor 24 via speech recognition software. After that, the textual and phonetic data are stored in home PC database 38 (block 74) and then, as with transmission of information from the home PC database 38, the textual phonetic data is sent to in-vehicle database 26 (block 64) where the information from remote database 42 is added to in-vehicle database 26, then the data is retrieved for recognition and display (blocks 52 and 54) and the CD is played (block 56). However, if no match is found even in the remote database, then the system, whether it be system 20A or 20B, simply defaults to known audio CD play operation and the default disc and track numbers are loaded (block 76) and the CD is played (block 56) by using the known manner of navigation.

By utilizing connections to both home database 38 and remote database 42, a user may utilize CD titles, song titles, or other personalized names for selecting which particular musical track is desired. Thus, operation and navigation of an audio compact disc is simplified in that a user may simply insert the CD into CD player 22 and instead of saying, "next", "previous", or "play track 6", the user may say something more to the effect of, "play such and such song" if for example, it is from a particular CD and the search of the databases will provide the information regarding that CD and the musical selection so that processor 24 may select the correct track to play utilizing only the song title without the user pressing buttons or repeating the same command.

While this invention has been described as having exemplary structures, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A method of navigating audio compact discs in a vehicle audio player, **characterized by** obtaining descriptive data from a voice instruction within the vehicle relating to a desired selection, matching the descriptive data with a selection available from the audio player (60, 62, 68), and playing the selection (56).

2. The method of claim 1 **characterized by** connecting to a remote database (64), determining if the remote database contains data relative to the selection (66), retrieving the data relative to the selection from the remote database (70), and displaying the data relative to the selection (54).

3. The method of claim 2 **characterized by** sending data from the remote database (70) to a local database (64), and storing the data sent from the remote database in the local database.

4. The method of claim 2 **characterized in that** the step of connecting to a remote database is preceded by remotely connecting to a home based audio database (58), determining if the home based audio database contains data relative to the selection (60, 62), retrieving the data relative to the selection from the home based audio database (64), and displaying the data relative to the selection (54).

5. The method of claim 4 **characterized by** sending the data from the home based audio database to a local database (64), and storing the data in the local database.

6. The method of claim 5 **characterized by** providing a default playing condition (76), using the default playing condition to play the selection in the audio player if the data relative to the selection is not found in the home based database and the remote database (56).

7. The method of claim 2 **characterized by** providing a default playing condition (76), using the default playing condition to play the selection in the audio player if data relative to the selection is not found in the remote database (56).

8. The method of claim 1 **characterized by** providing a local database associated with the in-vehicle audio player, determining if the local database contains data regarding the selection and retrieving that data (48, 52), and displaying the data regarding the selection (54).

9. The method of claim 8 **characterized by** connecting to a remote database (64), determining if the remote database contains the data relative to the selection and retrieving the data if stored in the remote database (66), and displaying the data relative to the selection (54).

10. A system for navigating audio selections (20A, 20B) in a vehicle utilizing voice instructions from within the vehicle, the system including an audio player (22) adapted to receive and play a selection, the system **characterized by** a processor (24) associated with said player, said processor including software adapted to receive voice instructions, process the voice instructions, and access information in a database (26, 38, 42) containing information relating to the audio selections; said software including instructions so that when voice instructions are provided in the vehicle, said processor accesses information relating to a selection from said database based upon the voice instructions received.

11. The system of claim 10 **characterized by** means for accessing comprising at least one wireless network (28, 36) structured and arranged to transmit the voice instructions to said database.

12. The system of claim 11 **characterized by** a plurality of wireless networks (28, 36) and a transmission device (30, 32) associated with each of said plurality of wireless networks whereby instructions are transmitted from one of said plurality of networks to another of said plurality of networks.

13. The system of claim 10 **characterized in that** said database is disposed remotely from said processor.

14. The system of claim 13 **characterized by** a local database (26) associated with said audio player, said local database receiving and storing information from said database through said processor.

15. The system of claim 13 **characterized in that** said processor accesses said database with means for accessing a wireless network (28, 36, 44).

16. The system of claim 13 **characterized in that** said means for accessing includes connections via the Internet.

17. The system of claim 10 **characterized in that** said database comprises a local database (26) associated with said processor, a remote database (42) located remotely from said processor, and a home-based database (38) connected to said local database and said remote database.

18. The system of claim 17 **characterized in that** when information is requested by said processor, said local database, said home-based database, and said remote database are searched sequentially.

19. A method of playing audio selections on an audio player in a vehicle **characterized by** describing via voice instructions a selection to be played which is available on the audio player, searching a database of audio information for data relating to the audio selection in the player (48, 60, 66), finding a match of the voice instructions to the selection of the audio player (50, 62, 68), and playing the selection (56).

20. The method of claim 19 **characterized by** failing to find a match of data relating to the audio selection (76), restoring a default condition of the audio player (76), and playing the selection using default condition (56).

21. The method of claim 19 **characterized by** searching a remotely disposed audio information database (66), finding a match within said remotely disposed database of data relating to the audio selection (68), and sending the data relating to the audio selection to the database from the remotely disposed database (70).

22. The method of claim 21 **characterized by** building a local database (64) by storing data from the remotely disposed database.

23. The method of claim 19 **characterized by** providing a home based database of audio information, searching said home based database for a match of data relating to the audio selection (60), finding a match of data relating to the audio selection within said home based database (62), and sending the data to the database from said home based database (64).

24. The method of claim 23 **characterized by** providing a remotely disposed database of audio information, searching said remotely disposed database for data to match data relating to the audio selection (66), finding a match of data relating to the selection (68), and sending the data relating to the selection to the home based database (70) and then to the database from the remotely disposed database (64).
